# EUROPEAN PATENT APPLICATION

(11) **EP 2 106 682 A1**
(43) Date of publication of application: **07.10.2009**
(21) Application number: 09156951.7
(22) Date of filing: 31.03.2009
(51) Int. Cl.: A01C 11/00

(54) **Method and vegetation structure for the early afforestation of unused ground and container for such vegetation structure**

(30) Priority: 31.03.2008 KR 20080030025; 15.07.2008 KR 20080068779
(71) Applicant: KNU-Industry Cooperation Foundation, 192-1 Hyoja-dong Chuncheon 200-701 (KR)
(72) Inventor: Chun, Su-Kyoung, 200-765, Gongwon-do (KR)
(74) Representative: CBDL Patentanwälte

(57) **Abstract**

The present invention relates to a method and a vegetation structure for the early afforestation of unused ground by using an aircraft (5) and a container (1) for such vegetation structure. In particular, the invention discloses a method and a vegetation structure for the early afforestation of unused ground by airdropping said vegetation structure in which a plant (2,20) has been vegetated with an aircraft (5) such as a helicopter onto dune ground, barren ground, steep slope ground, bedrock ground of a rocky mountain, inclined ground as well as ground extinguished due to a fire. The method of the present invention has a superior effect on remarkably reducing the labor power needed for afforestation and maintaining the stability of afforestation.

## Description

### TECHNICAL FIELD OF THE INVENTION

The present invention relates to a method and vegetation for the early afforestation of unused ground as well as to a container for such vegetation structure. More specifically, the invention relates to a method for the early afforestation of unused ground by airdropping vegetation structures onto the ground with an aircraft such as helicopter.

### TECHNICAL BACKGROUND OF THE INVENTION

Up to the present, in order to afforest unused ground such as inclined ground, there has been study for developing a method for the afforestation of inclined ground in which the inclined ground was being covered with a net or a concrete.

Korean Patent No. 10-729417 discloses an afforestation structure composed of a net, a soil wall layer and an upper soil layer. Korean Patent No. 10-661852 also discloses a method for the afforestation of a slope surface of inclined ground without using a fiber net, a net or concrete, in which cultured soil was prepared by mixing with fermentation solution and the cultured soil was molded on the inclined ground, and a sprouting seed was scattered.

Korean Patent No. 10-542729 discloses a method for the installation of a block for reinforcing afforestation on a slope surface of inclined ground, and Korean Patent No. 10-473540 discloses a method for developing afforestation by fixing a bag filling with earth and sand onto the ground with a fin to prevent a loss of soil.

Korean Patent No. 10-426129 discloses a method for the afforestation of inclined ground in which inclined ground was covered with a diaper wire net and fixed with anchor fin and then an artificial green soil composition was applied onto with the thickness of 20cm.

However, there is a problem that these methods for the afforestation were only suitable for inclined ground and cannot be applied to extinguished ground, dune ground, barren ground, steep slope ground or bedrock ground.

### SUMMARY OF THE INVENTION

It is an object of the invention to disclose a method and a vegetation structure which facilitate easy, efficient and economic afforestation of different types of unused ground such as extinguished ground, dune ground, barren ground, steep slope ground or bedrock ground.

According to the invention, a vegetation structure, in which a plant is grown and hardened in a preliminary prepared structure, is airdropped onto unused ground with an aircraft such as a helicopter and that necessary measures such as molding, treatment or application with inhibitor for the evaporation of moisture to reduce a labor power and to secure the afforestation are performed.

According to a preferred embodiment of the invention, a vegetation structure with a regular shape suitable for each kind of unused ground is prepared with a mixture of seed, rooting promoter and soil, fixing the vegetation structure directly or with putting in a sand bag or the like, then rooting and growing the vegetation structure in the outdoors or greenhouse and finally directly dropping the vegetation structure onto the unused ground with an aircraft such as a helicopter such that the vegetation structure is subject to root early and stably on the unused ground.

### ADVANTAGEOUS EFFECTS

According to the present invention, vegetation material that is sufficiently grown and hardened is directly airdropped in a suitable container such as a wooden container onto the unused ground to make possible to naturally afforest the unused ground such that the present invention is very useful in the industry of landscape architecture and vegetation because a labor power is considerably saved and security of afforestation is early achieved to effect on carrying out the early vegetation of the unused ground.

### DESCRIPTION OF DRAWINGS

FIG. 1 shows a custom-type conical wooden container in accordance with the preferred embodiment of the present invention.
FIG. 2a shows the vegetation state of a coniferous tree and FIG. 2b shows the vegetation state of a broadleaf tree.
Figs. 3, 4 and 5a show vegetation structures of the present invention, each having a container of natural fiber.

Figs 5b and 6 show vegetation structures of the present invention having different containers of wood.

Figs. 7a and 7b show various type of vegetation structures for airdropping to afforest unused ground according to the invention, wherein each vegetation structures has a container, in which a number of plant seed is sown and grown.

FIG. 8 is a schematic drawing showing the principle of performing the method according to the invention with an aircraft such as a helicopter.

### DESCRIPTION OF PREFERRED EMBODIMENTS

In the followings, the present invention is more detailed described with reference to the attached drawings.

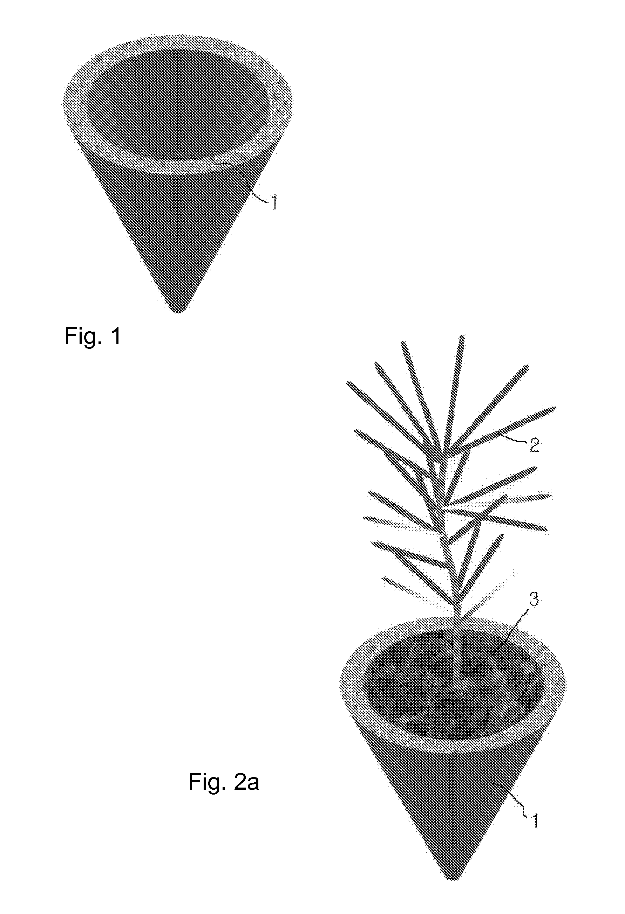

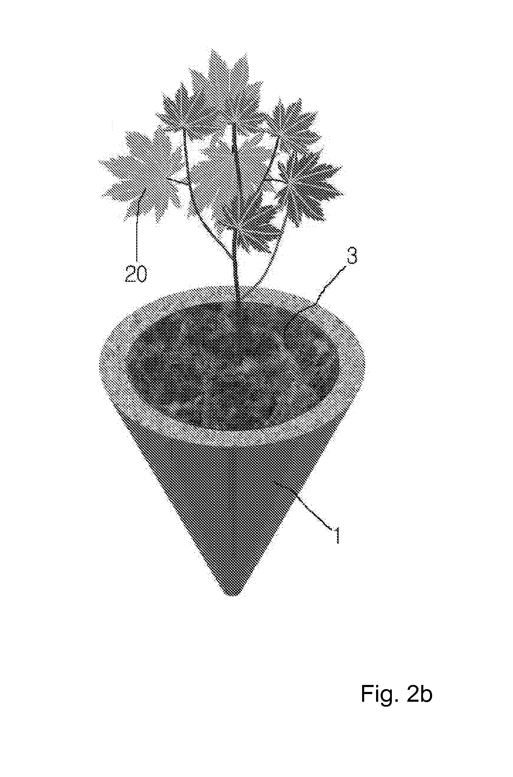

Figs. 2 to 7 show different preferred vegetation structures for use in the early afforestation of unused ground.

Figs. 2a and 2b show a coniferous tree 2 resp. a broadleaf tree 20 grown in a container 1 suitable for airdropping onto the unused ground with an aircraft. Vegetation soil 3 made by mixing artificial soil, fertilizer, and seed and rooting promoter are inserted into the container 1. The seed is then sprouted, rooted and hardened in the container 1.

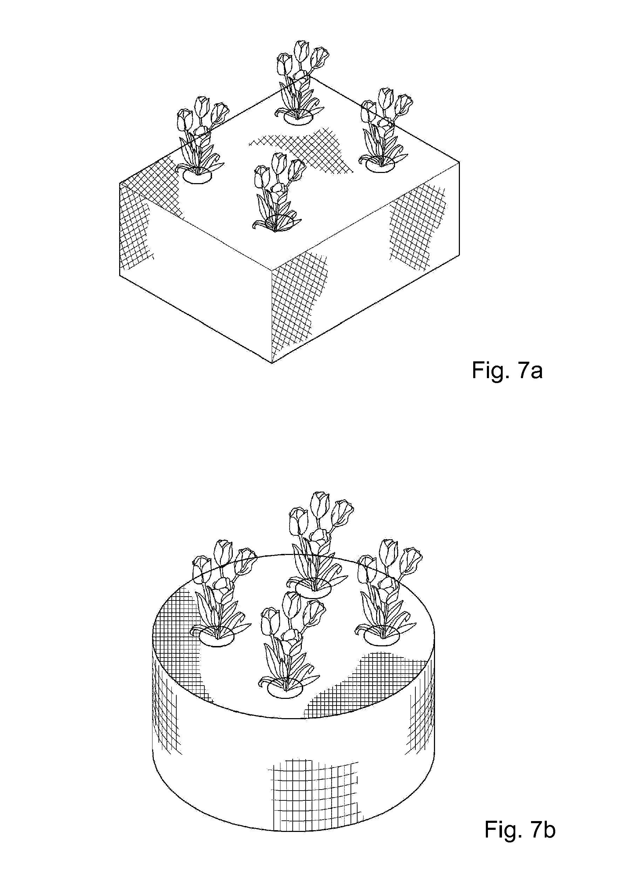

FIG. 7 shows a container of hexahedron type (FIG. 7a) and of cylindrical type (FIG. 7b) made of natural fibers suitable for airdropping, in which a number of plant seed is sown and grown therein, and then the grown plant is vegetated in the container.

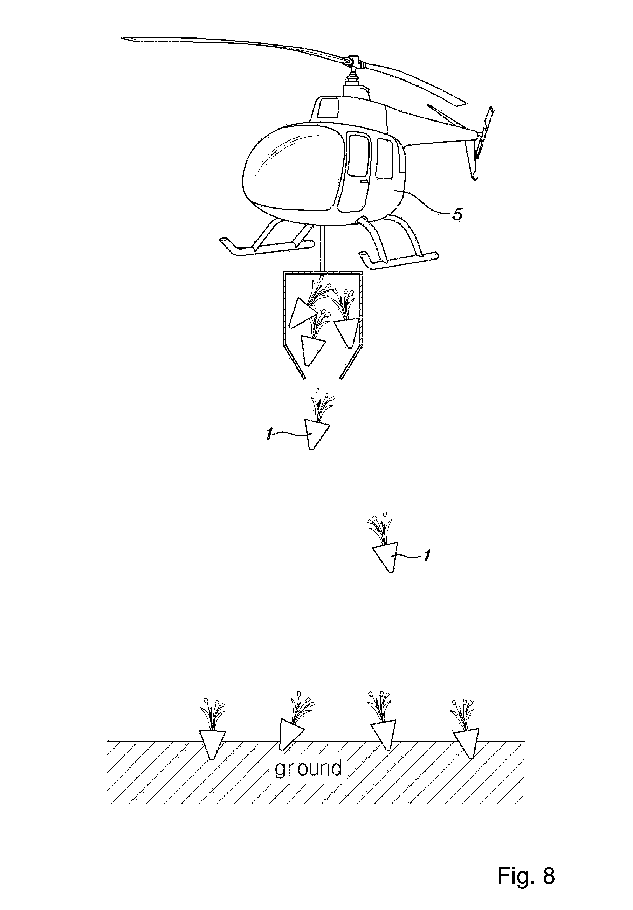

FIG. 8 shows schematically applying the present invention with an aircraft such as a helicopter 5.

FIG. 1 shows a conical wooden container for using with the preferred vegetation structure of the present invention. Preferably, the container has a diameter of 30 - 90 mm and a corner length of 100 - 200 mm, and most preferably, the container has a diameter of 60 mm and a corner length of 150 mm.

According to experiments conducted by the applicant, the wooden container of the present invention preferably has a thickness of 3 - 8 mm and, most preferably, a thickness of 5 mm. With this, both, a coniferous tree and a broadleaf tree, need about two months for taking root through the wooden container.

In the present invention, the soil composition for the vegetation, which is the growing medium of plant seed, is an artificial soil, preferably peat moss. A rooting promoter for plant seed can be used suitable for a coniferous tree and a broadleaf tree, and amount of 0.1 weight% of the artificial soil is preferred.

The vegetation structure of the present invention, for example the conical wooden structure, as shown in FIG. 7, is less broken when being airdropped by an aircraft such as a helicopter 5 onto the unused ground. In fact, the probability that the structure of the present invention will be broken upon dropping from a height of 100 m onto the ground is below 0.01 %.

In the preparation for such circumstances, the conical wooden structure of the present invention comprises sand bag therein and thus it can fix the opening of the structure when artificial soil, fertilizer, seed and rooting promoter are mixed and inserted, such that the conical wooden vegetation structure can be used from the beginning.

Such conical vegetation structures are preferred for the afforestation of inclined ground, dune ground or tropical rain forest having much of solid waste compost.

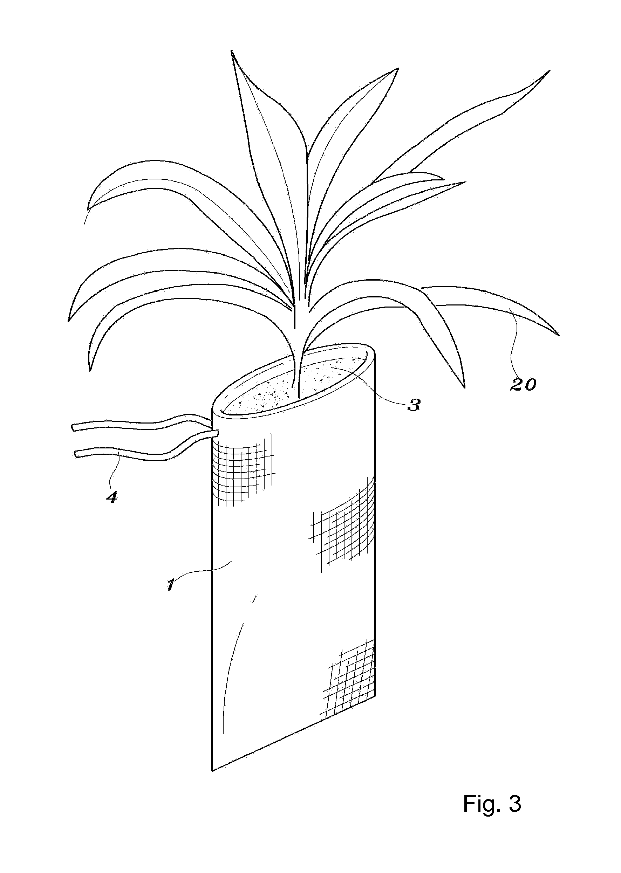

In addition, a vegetation structure of the conical sand bag type, which is substituting for the conical wooden type, would be an embodiment of FIG. 3.

Such vegetation structure of the conical sand bag type can be prepared with natural fibers such as cotton, hemp, core from palm.

It can be foreseen that the opening of the structure 1, in which a plant or several plants is resp. are grown by sowing seed into soil with fertilizer are tightly tied with a rope 4 to prevent from spilling off the soil with impact in the dropping.

The vegetation structure of the present invention is suitable for being applied to unused ground such as bedrock ground of rocky mountain or hill ground, on which the structure can be easily distributed by direct airdropping.

Roots of the vegetated plant secrete a material capable of dissolving the second mineral of rock via root cells, and root hair cell physically pass through the dissolved place to take root. The structure of natural fiber 1 can be preferred to prepare with hemp thread having thickness capable of preventing from sleeping in order to keep away from rolling over bedrock of rocky mountain.

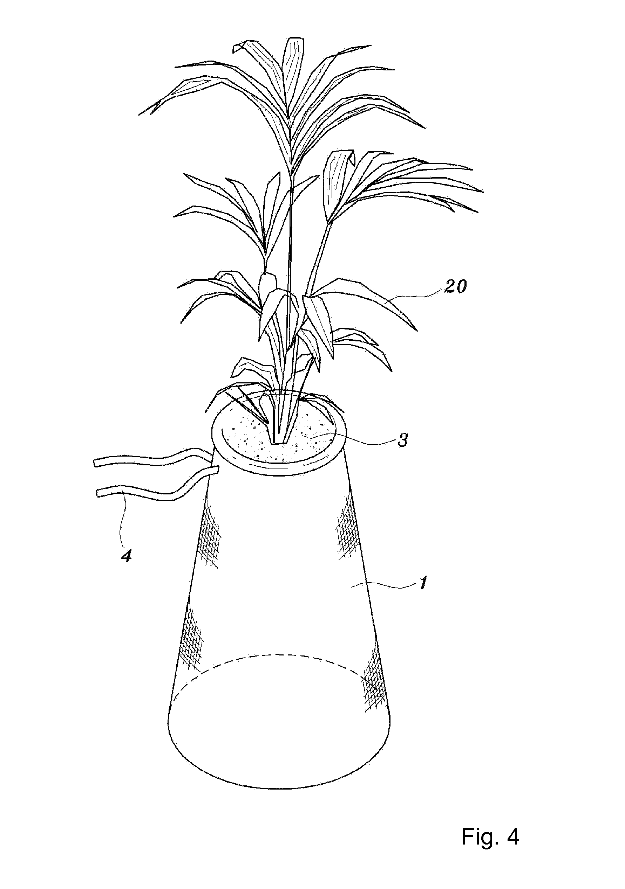

The vegetation structure shown in FIG. 4 is one embodiment of the present invention suitable for effectively and all at once afforestating most of extinguished ground, on which a forest fire has been occurred extensively.

Since vegetation of fire extinguished ground, on which a forest fire has occurred, is destroyed all at once, it is preferred that the custom-made vegetation structure suitable for recovering the extinguished ground should be prepared by weaving natural fibers in order to early secure sod and have the plane bottom as shown in FIG. 4.

Such vegetation structure is also suitable for the afforestation of bedrock ground in a rocky mountain because it does not easily roll.

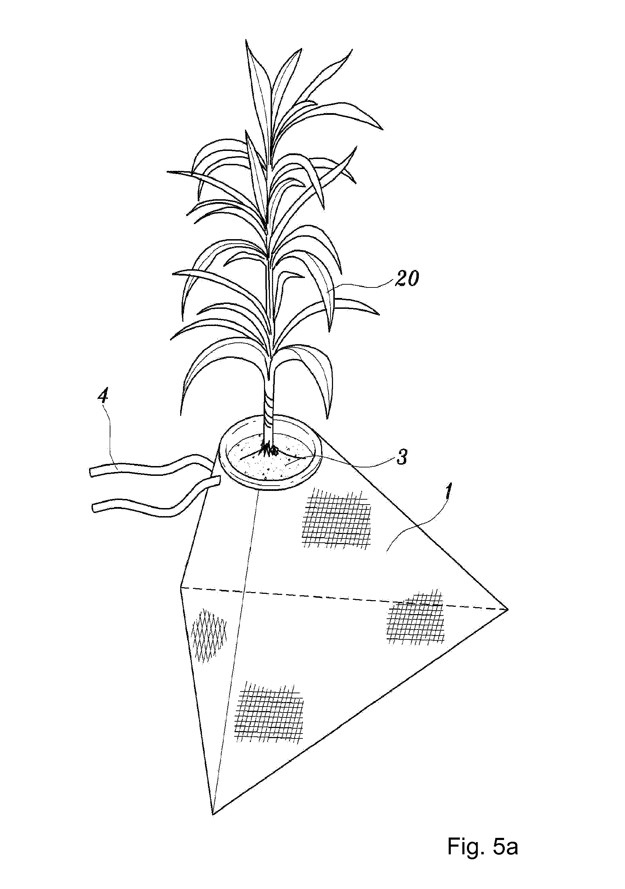

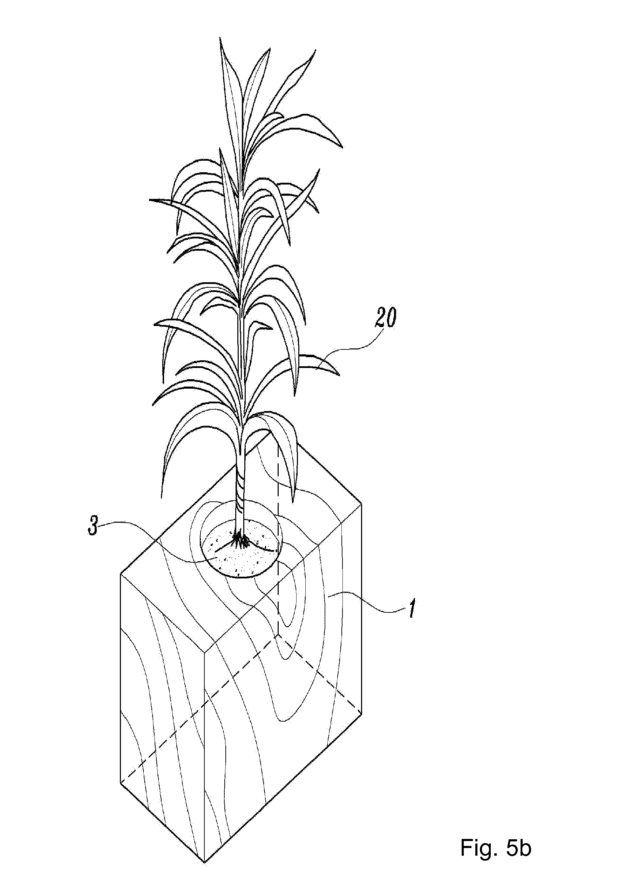

In addition, another embodiment of the present invention is shown in FIG. 5. The vegetation structure, comprising a container made of natural fibers as shown in FIG. 5, is suitable for being applied to steep slope ground or inclined ground, which might be inclined for the construction of a new road, such as an expressway.

The container of such vegetation structure is preferably made of natural fibers such as cotton or hemp, and most preferably has a bottom and three sides of the shape of a regular triangle or an isosceles triangle.

The container having such constitution and type is characterized in that the container is a polyhedron, in which four faces are formed with regular angles, so that it can be easily landed on the ground without sliding and can minimize the damage of a plant, when the vegetation structure containing a plant 20, which is regularly grown by sowing seed into artificial soil composition composed of fertilizer, rooting promoters and soil, is airdropped.

Another preferred vegetation structure of the present invention is shown in FIG. 5b, having a container made of wood. In this example, the container of wood has a regular or rectangle polyhedron type, which is appropriate for the early afforestation of dune ground or inclined ground. A vegetation structure of this shape can also be made by using natural fibers. Such vegetation structure having a regular or rectangle polyhedron type is appropriate for in the early afforestation of bedrock or inclined ground because it has high friction coefficient due to the multi-side construction.

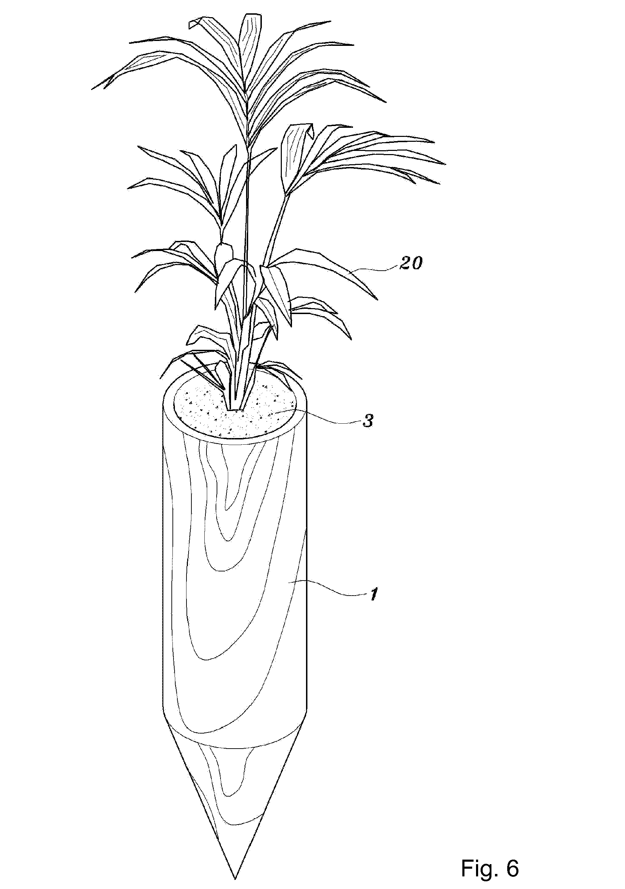

Another example of a vegetation structure having a wooden container is shown in FIG. 6. Here, the container is of a cylinder conical type. A vegetation structure having a container of such type and constitution can be applied in the early afforestation of dune ground or solid waste compost ground.

Again, a vegetation structure having a similar shape as shown in FIG. 6 can also be made by using a container of natural fibers instead of wood. Such vegetation structure is very useful for the early afforestation of barren ground or bedrock ground.

In a preferred embodiment, a composite fertilizer, in which nitrogen N, phosphorous P and potassium K are mixed with micro elements, can be used as fertilizer in amount of less than 10 weight% of the soil composition.

According to the present invention, an environmental friendly container can be broadly applied and the custom-made vegetation structure can be adapted to the type of unused ground.

According to another preferred embodiment of the present invention, a method for the early afforestation is provided, which comprises seeding and growing various plant seeds in a container of natural fibers and airdropping the container of vegetating plants onto the ground by an aircraft.

FIG. 7 shows vegetation structures having a container of regular hexahedron type (FIG. 7a) and of cylindrical sack type (FIG. 7b). Of course, different types of containers can be used, such as a rectangular parallelepiped type, a lozenge type or an oval sack type.

### INDUSTRIAL APPLICABILITY

The present invention provides an environmental friendly custom-made vegetation structure suitable for the early afforestation of unused ground with an aircraft. Thus, the present invention is very useful for the forestation industry of unused ground.

## Claims

1. A method for the early afforestation of unused ground,
**characterized in that**
a plurality of vegetation structures are airdropped onto the unused ground by an aircraft.

2. The method for the early afforestation of unused ground according to claim 1,
**characterized in that**
the unused ground is any one of inclined ground, extinguished ground, dune ground, barren ground, steep sloped ground or bedrock ground.

3. The method for the early afforestation of unused ground according to claim 1 or 2,
**characterized in that**
the vegetation structure comprises a custom-type artificial container made of wood or natural fibers.

4. The method for the early afforestation of unused ground according to claim 3, wherein the container is made of natural fibers,
**characterized in that**
the natural fibers are cotton, hemp or core of palm or a mixture of these fibers.

5. The method for the early afforestation of unused ground according to one of the claims 1 to 4,
**characterized in that**
the vegetation structure has a shape suitable for dropping onto the unused ground with an aircraft.

6. The method for the early afforestation of unused ground according to one of the claims 1 to 5,
**characterized in that**
making the vegetation structure comprises mixing seed with an artificial soil composition composed of sprouting and rooting promotor, fertilizer and peat moss, and growing them for 2 months after rooting.

7. A vegetation structure for the early afforestation of unused ground,
**characterized in that**
it is adapted for being airdropped onto the unused ground by an aircraft and
it comprises a container containing at least one plant.

8. The vegetation structure according to claim 7,
**characterized in that**
the container is made of wood or made of natural fibers.

9. The vegetation structure according to claim 8, wherein the container is made of wood,
**characterized in that**
the container has a thickness of 3 - 8 mm and, more preferably, a thickness of 5 mm.

10. The vegetation structure according to claim 8, wherein the container is made of natural fibers,
**characterized in that**
the natural fibers are cotton, hemp or core of palm or a mixture of these fibers.

11. The vegetation structure according to one of the claims 7 to 10,
**characterized in that**
the container has the shape of a cone, preferably with a diameter at the open end of the cone of 30 - 90 mm and a corner length of 100 - 200 mm, and more preferably with a diameter of 60 mm and a corner length of 150 mm.

12. The vegetation structure according to one of the claims 7 to 10,
**characterized in that**
the container has the shape of a polyhedron with four faces, of a cylinder with or without a conical tip, of a regular hexahedron or of a rectangular parallelepiped.

13. A container for a vegetation structure for the early afforestation of unused ground, capable of containing at least one plant,
**characterized in that**
it is adapted for being airdropped onto the unused ground by an aircraft and
it is made of wood or made of natural fibers, in particular cotton, hemp or core of palm or a mixture of these fibers, such that it can be penetrated by the roots of a plant contained in said container.

14. The container according to claim 13, wherein the container is made of wood,
**characterized in that**
the container has a thickness of 3 - 8 mm and, more preferably, a thickness of 5 mm.

15. The container according to claim 13 or 14,
**characterized in that**
the container has the shape of a cone, preferably with a diameter at the open end of the cone of 30 - 90 mm and a corner length of 100 - 200 mm, and more preferably with a diameter of 60 mm and a corner length of 150 mm, or the shape of a polyhedron with four faces, or the shape of a cylinder with or without a conical tip, or the shape of a regular hexahedron or or the shape of a rectangular parallelepiped.
